# EUROPÄISCHE PATENTSCHRIFT

(11) **EP 3 027 990 B1**
(45) Veröffentlichungstag und Bekanntmachung des Hinweises auf die Patenterteilung: **08.11.2017**
(21) Anmeldenummer: 14747836.6
(22) Anmeldetag: 28.07.2014
(51) Int. Cl.: F27B 7/20

(54) **ANLAGE UND VERFAHREN ZUR THERMISCHEN BEHANDLUNG EINES MATERIALSTROMS**
PLANT AND PROCESS FOR THERMALLY TREATING A FLOW OF MATERIAL
INSTALLATION ET PROCÉDÉ DE TRAITEMENT THERMIQUE D'UN FLUX DE MATIÈRE

(30) Priorität: 31.07.2013 DE 102013108226
(43) Veröffentlichungstag der Anmeldung: 08.06.2016
(73) Patentinhaber: ThyssenKrupp Industrial Solutions AG, 45143 Essen (DE)
(72) Erfinder: HILDEBRANDT, Sven, 59269 Beckum (DE); GRUND, Guido, 59457 Werl (DE); SCHUH, Uwe, 59071 Hamm (DE)
(74) Vertreter: thyssenkrupp Intellectual Property GmbH
(86) Internationale Anmeldenummer: PCT/EP2014/002055
(87) Internationale Veröffentlichungsnummer: WO 2015/014472

(56) Entgegenhaltungen:
- EP-A1- 0 256 021
- US-A- 4 071 309

## Beschreibung

Die Erfindung betrifft eine Anlage und ein Verfahren zur thermischen Behandlung eines Materialstroms, insbesondere von Erzen und/oder Mineralien und/oder biogenen Stoffen und/oder eines Kohlenstoff enthaltenden Stoffstroms.

Bei der thermischen Behandlung von Materialströmen, insbesondere bei der thermischen Aufbereitung von Erzen und Mineralien muss berücksichtigt werden, dass die einzelnen Erzschichten in der Lagerstätte unterschiedliche Zusammensetzungen aufweisen können, die entsprechend angepasste Aufbereitungsschritte erfordern. So müssen manche Schichten lediglich getrocknet, andere getrocknet und bei optimierten Temperaturen kalziniert, oxidiert oder für nachfolgende Prozesse aufgeheizt werden. Um eine gute Qualität des Produktes bereitstellen zu können, muss die thermische Aufbereitung so schonend erfolgen, dass die Reaktivität weitestgehend erhalten bleibt. Somit sollte ein Material, welches lediglich getrocknet werden muss, nicht durch einen weiteren Wärmebehandlungsprozess laufen. Da auch unterschiedliche Weiterverarbeitungsschritte unterschiedliche Produktqualitäten benötigen, ist es vorteilhaft, wenn eine Anlage unterschiedliche Produkte erzeugen kann und so verschiedene Märkte bedient werden können.

Üblicherweise besteht eine Anlage zur thermischen Aufbereitung eines Materialstroms aus einer Trocknungseinrichtung und einer thermischen Behandlungseinrichtung, wobei die Abgase der thermischen Behandlungseinrichtung durch die Trocknungseinrichtung geführt werden. Die beiden Prozessstufen können dabei nicht getrennt voneinander betrieben werden, wodurch keine Flexibilität hinsichtlich der Produktanforderungen bzw. -eigenschaften gegeben ist. Man hat daher auch vorgeschlagen, die Trocknung und die weitere thermische Behandlung voneinander zu trennen, sodass der Materialstrom wahlweise eine oder beide Prozessstufen durchläuft. Hierbei kann zwar die thermische Aufbereitung gezielt auf die Eigenschaften des zu behandelnden Materialstroms abgestellt werden, jedoch ist hierfür ein relativ hoher apparativer Aufwand erforderlich.

Aus der US 4 071 309 A ist eine Anlage zur Herstellung von Portlandzement bekannt, bei der das Rohmaterial vorgewärmt und in einem Ofen gebrannt wird. Weiterhin ist eine zusätzliche Brennkammer vorgesehen, dessen Abgase zur Wärmebehandlung des vorgewärmten Rohmaterials verwendet werden. Über eine Materialweiche wird das aus dem Vorwärmer kommende, vorgewärmte Rohmaterial der zusätzlichen Brennkammer und/oder in eine an den Ofen angeschlossene Abgasleitung eingeführt. Des Weiteren wir Verbrennungsluft in einem Wärmetauscher erwärmt und über eine Gasweiche der zusätzlichen Brennkammer und/oder dem Ofen zugeführt.

Eine weitere Anlage zur Zementherstellung ist aus der EP 0 256 021 A1 bekannt.

Der Erfindung liegt daher die Aufgabe zugrunde, eine Anlage und ein Verfahren zur thermischen Aufbereitung eines Materialstroms anzugeben, wobei eine flexible, auf die Eigenschaften des zu behandelnden Materialstroms abgestellte thermische Aufbereitung mit einem reduzierten apparativen Aufwand möglich ist.

Erfindungsgemäß wird diese Aufgabe durch die Merkmale der Ansprüche 1 und 9 gelöst.

Die erfindungsgemäße Anlage zur thermischen Aufbereitung eines Materialstroms besteht im Wesentlichen aus
- einem Heißgaserzeuger zur Erzeugung eines Heißgasstroms,
- einer thermische Behandlungseinrichtung, die über eine Heißgasleitung mit dem Heißgaserzeuger verbunden ist und einen Materialeinlass zur Aufgabe des thermisch zu behandelnden Materialstroms, einen Materialauslass zum Abführen des thermisch behandelten Materialstroms und einem Abgasauslass aufweist,
- einer Trocknungseinrichtung, die mit dem Abgasauslass der thermischen Behandlungseinrichtung verbunden ist und einen Materialeinlass zur Aufgabe eines zu trocknenden Materialstroms, einen Materialauslass zum Abführen des getrockneten Materialsstroms und eine Trocknerabgasleitung aufweist,

- einer verstellbaren Materialweiche mit einem Eingang und wenigstens einem ersten und einem zweiten Ausgang, wobei der Eingang der Materialweiche mit dem Materialauslass der Trocknungseinrichtung und der erste Ausgang der Materialweiche mit dem Materialeinlass der thermischen Behandlungseinrichtung in Verbindung steht und der zweite Ausgang der Materialweiche zum Abführen des getrockneten Materialstroms dient, und
- einer verstellbaren Gasweiche mit einem Eingang und wenigstens einem ersten und einem zweiten Ausgang, wobei der Eingang der Gasweiche mit dem Heißgaserzeuger und der erste Ausgang der Gasweiche mit der thermischen Behandlungseinrichtung und der zweite Ausgang der Gasweiche mit der Trocknungseinrichtung in Verbindung steht.

Beim erfindungsgemäßen Verfahren zur thermischen Aufbereitung eines Materialstroms wird in einem Heißgaserzeuger ein Gasstrom erzeugt, der in einer thermischen Behandlungseinrichtung zur thermischen Behandlung des Materialstroms verwendet wird. In einer Trocknungseinrichtung wird der Materialstrom getrocknet, wobei die Option besteht, den getrockneten Materialstrom entweder auszuschleusen oder der thermischen Behandlungseinrichtung zuzuführen und wobei weiterhin die Option besteht, die Trocknungseinrichtung mit Abgasen der thermischen Behandlung des Materialstroms und/oder mit wenigstens einem Teil des im Heißgaserzeuger erzeugten Heißgasstroms zu betreiben.

Durch die erfindungsgemäße Lösung kann die thermische Aufbereitung flexibel über einen einzigen Heißgaserzeuger betrieben werden, wobei über die Gasweiche, die auch durch Klappen oder Schieber gebildet werden kann, der erzeugte Heißgasstrom entweder der thermischen Behandlungseinrichtung und/oder der Trocknungseinrichtung zugeführt werden kann. Weiterhin besteht die Möglichkeit, die Abgase der thermischen Behandlungseinrichtung in der Trocknungseinrichtung zu nutzten. Optional besteht daher die Möglichkeit, den erzeugten Heißgasstrom auch für diesen Fall teilweise dem Trockner zuzuführen, wobei das Energieniveau des Abgases der thermischen Behandlungseinrichtung erhöht und so die Trocknung in der Trocknungseinrichtung verbessert werden kann.

Durch die Einsparung eines zweiten Heißgaserzeugers können die Investitions-, Betriebs- und Wartungskosten gesenkt werden. Durch die Materialweiche und die Gasweiche kann die thermische Aufbereitung auf die Eigenschaften des Materialstroms abgestellt werden. So besteht die Möglichkeit einer alleinigen Trocknung oder die Kombination von Trocknung und eines weiteren thermischen Prozesses, der beispielsweise ein Kalzinieren, ein Oxidieren oder lediglich ein Aufheizen des Materialstroms beinhalten kann. Ist lediglich die Trocknung des Materialstroms erforderlich, besteht die Möglichkeit, die Gasweiche so zu schalten, dass lediglich die Trocknungseinrichtung durchströmt wird. Die Heißgase werden somit nicht durch die thermische Behandlungseinrichtung geführt, die in diesem Fall nicht benötigt wird, sodass Druck- sowie Wärmeverluste gering gehalten werden und so unnötige Betriebskosten vermieden werden. Die Gasweiche bietet darüber hinaus im Kombinationsbetrieb den Vorteil, dass die Temperatur der Abgase der thermischen Behandlungseinrichtung, welche nachfolgend in der Trocknungseinrichtung genutzt werden, gezielt angehoben werden können, indem ein Teil des Heißgases direkt in die Trocknungseinrichtung geleitet wird. Zweckmäßigerweise ist hierfür eine entsprechend ausgebildete Steuereinrichtung vorgesehen, die den durch die Trocknungseinrichtung zu leitenden Gasstrom in seiner Menge und/oder seiner Temperatur an die jeweiligen Bedürfnisse anpasst. Hierfür können geeignete Durchflusssensoren bzw. Durchflussorgane und Temperatursensoren an geeigneten Stellen vorgesehen werden.

Weitere Ausgestaltungen der Erfindung sind Gegenstand der Unteransprüche.

Gemäß einer bevorzugten Ausführung werden die Trocknungseinrichtung und/oder die thermischen Behandlungseinrichtung durch eine Steigleitung und/oder eine Wirbeleinrichtung und/oder ein Drehrohr und/oder eine Fluidisiereinrichtung gebildet. Weiterhin ist vorgesehen, dass die Trocknungseinrichtung und/oder die thermische Behandlungseinrichtung jeweils wenigstens einen Abscheider zur Trennung des Materialsstroms vom Gasstrom (Abgas der Trocknungseinrichtung bzw. Abgas der thermischen Behandlungseinrichtung) aufweisen kann.

Die Gasweiche ist vorzugsweise so verstellbar, dass der Eingang der Gasweiche wahlweise mit einem oder mit beiden Ausgängen verbunden ist. Die Materialweiche ist vorzugsweise so einstellbar, dass der Eingang der Materialweiche wahlweise mit dem einen oder mit dem anderen Ausgang verbunden ist. Weiterhin kann die thermische Behandlungseinrichtung ein oder mehrere Vorwärmerstufen umfassen. Prinzipiell kann die thermische Behandlungseinrichtung zum Kalzinieren oder Oxidieren oder Aufheizen des Materialstroms ausgebildet sein.

Der Heißgaserzeuger kann mit festem, flüssigem oder gasförmigem Brennstoff oder einer Kombination derselben betrieben werden. Gemäß einer weiteren Ausgestaltung der Erfindung ist der Heißgaserzeuger mit einer Torrefizierungs- und/oder einer Pyrolyseeinrichtung verbunden, um auf diese Weise mit Brenngas oder Brennstoff versorgt zu werden. Als Brennstoff für den Heißgaserzeuger kommen insbesondere feste und/oder flüssige und/oder gasförmige Brennstoffe aus erneuerbaren Rohstoffen und/oder wiederverwertbaren Rohstoffen, wie beispielsweise ein behandeltes Material und/oder Gas und/oder Öl aus einer Torrefizierungs- und/oder einer Pyrolyseeinrichtung, in Betracht. Der Heißgaserzeuger kann außerdem zumindest teilweise mit Wärme oder Energie aus Anlagen erfolgen, die im Verbund mit der dargestellten Anlage stehen.

Weiterhin kann vorgesehen werden, dass der Materialstrom nach der thermischen Behandlung gekühlt wird, wobei die dabei entstehende Wärme und/oder Energie rekuperiert und für die Trocknung und/oder thermischen Behandlung wenigstens teilweise zurückgeführt und/oder verstromt wird.

Weitere Vorteile und Ausgestaltungen der Erfindung werden anhand der nachfolgenden Beschreibung und der Zeichnung näher erläutert.

In der Zeichnung zeigen
- Fig. 1: eine schematische Darstellung der erfindungsgemäßen Anlage, bei der die Trocknungseinrichtung und die thermische Behandlungseinrichtung in Betrieb sind und
- Fig. 2: eine schematische Darstellung der erfindungsgemäßen Anlage, bei der lediglich die Trocknungseinrichtung in Betrieb ist.

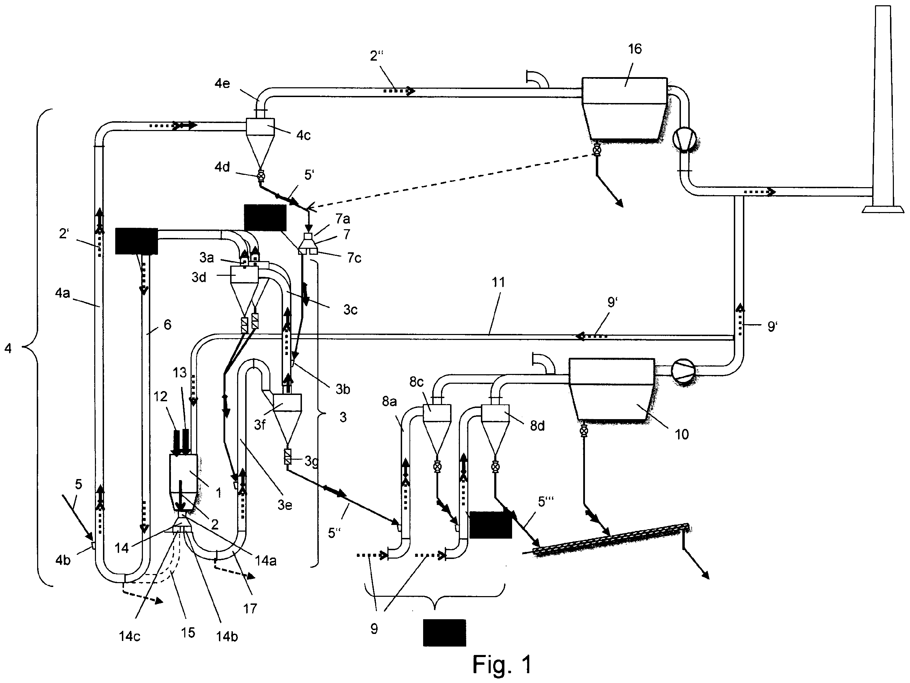

Die in Fig. 1 dargestellte Anlage zur thermischen Aufbereitung eines Materialstroms dient insbesondere zur Aufbereitung von Erzen und Mineralien, beispielsweise Phosphaterzen. Sie kann aber prinzipiell auch für andere Materialströme, wie biogene Stoffe und/oder Kohlenstoff enthaltende Stoffströme, eingesetzt werden.

Sie weist einen Heißgaserzeuger 1 zur Erzeugung eines Heißgasstroms 2, eine thermische Behandlungseinrichtung 3 und eine Trocknungseinrichtung 4 auf. Die Trocknungseinrichtung 4 ist im dargestellten Ausführungsbeispiel mit einer Steigleitung 4a ausgestattet, die am unteren Ende einen Materialeinlass 4b aufweist, über den ein zu trocknender Materialstrom 5, beispielsweise Phosphaterz, zugeführt und mit einen Trocknungsgasstrom 2" getrocknet wird.

An ihrem unteren Ende steht die Steigleitung 4a über eine Verbindungsleitung 6 mit einem Abgasauslass 3a der thermischen Behandlungseinrichtung 3 in Verbindung. Am oberen Ende der Steigleitung 4 mündet diese in einen Abscheider 4c, um den getrockneten Materialstrom 5' vom feuchten Trocknungsgasstrom 2'" zu trennen. Der Materialauslass 4d der Trocknungseinrichtung 4 wird dabei durch den Materialauslass des Abscheiders 4c gebildet. Nach der Abtrennung des getrockneten Materialstroms 5' im Abscheider 4c gelangt der feuchte Trocknungsgasstrom 2"' durch die Trocknerabgasleitung 4e in einen Staubabscheider 16.

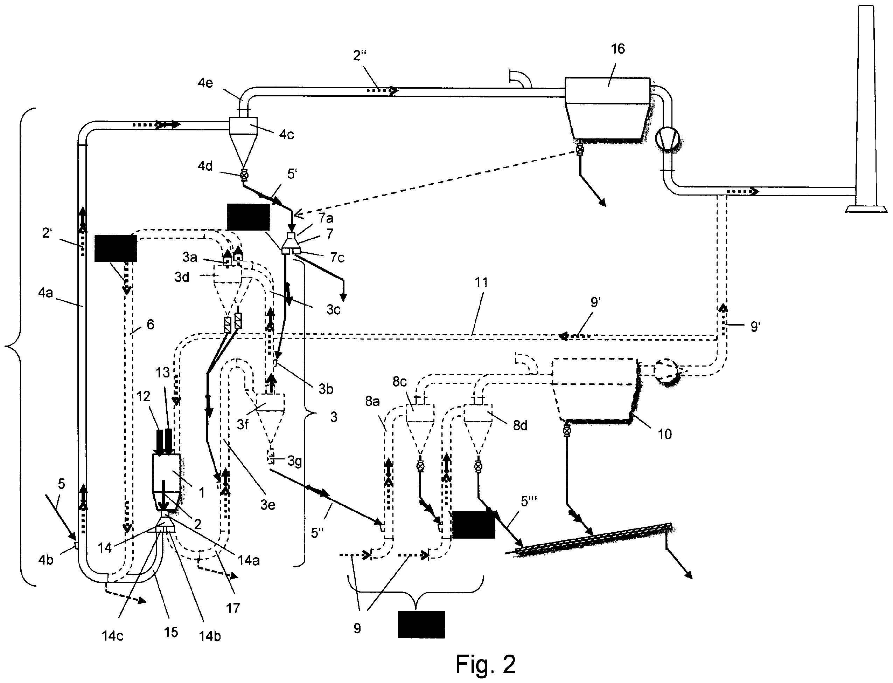

Weiterhin ist eine einstellbare Materialweiche 7 vorgesehen, deren Eingang 7a mit dem Materialauslass 4d der Trocknungseinrichtung in Verbindung steht. Die Materialweiche 7 weist ferner einen ersten Ausgang 7b auf, der mit einem Materialeinlass 3b der thermischen Behandlungseinrichtung 3 in Verbindung steht. Ein zweiter Ausgang 7c der Materialweiche 7 dient zum Abführen des getrockneten Materialstroms 5', wenn keine weitere thermische Behandlung erforderlich ist (siehe Fig. 2).

Im dargestellten Ausführungsbeispiel wird der getrocknete Materialstrom 5' jedoch über den Materialeinlass 3b der thermischen Behandlungseinrichtung 3 zugeführt, die zunächst eine Vorwärmstufe 3c aufweist, die hier als einstufiger Schwebegasvorwärmer ausgebildet ist, wobei hier eine Ausführung mit zwei parallelen Stufen dargestellt ist. Die Vorwärmstufe 3c umfasst einen Abscheider 3d mit einem Gasauslass, der den Abgasauslass 3a der thermischen Behandlungseinrichtung bildet. Das vorgewärmte und im Abscheider 3d abgeschiedene Material wird einer Steigleitung 3e zugeführt, die mit einem Ende über eine Heißgasleitung 17 mit dem Heißgaserzeuger 1 in Verbindung steht und vom Heißgas 2 durchströmt wird. Der Materialauslass 3g der thermischen Behandlungseinrichtung 3 wird dabei durch den Materialauslass des Abscheiders 3f gebildet. Am Ende der Steigleitung 3e ist ein weiterer Abscheider 3f vorgesehen, um den thermisch behandelten Materialstrom 5" vom Abgas 2' zu trennen, das nachfolgend als Trocknungsgasstrom 2" die Vorwärmstufe 3c durchströmt und über den Abgasauslass 3a und die Verbindungsleitung 6 in die Trocknungseinrichtung 4 gelangt. Die Stoffströme sind in den Leitungen mit durchgezogenen Pfeilen und die Gasströme mit gestrichelten Pfeilen dargestellt.

Der thermisch behandelte Materialstrom 5" kann nachfolgend beispielsweise einer Kühleinrichtung 8 zugeführt werden, die im dargestellten Ausführungsbeispiel ebenfalls mit Steigleitungen 8a, 8b und zugehörigen Abscheidern 8c, 8d ausgebildet ist. Als Kühlmedium 9 wird beispielsweise Luft eingesetzt. Der im letzten Abscheider 8d abgeschiedene, gekühlte Materialstrom 5"' wird abgezogen. Die abgeschiedene Kühlluft 9' wird in einem Stauabscheider 10 entstaubt und gelangt dann in die Atmosphäre. Ein Teil der Kühlluft 9' kann über eine Leitung 11 dem Heißgaserzeuger zugeführt, um dort mit Hilfe von Brennstoff 12 und Verbrennungsluft 13 zur Erzeugung des Heißgasstroms 2 verwendet zu werden.

Das im Heißgaserzeuger 1 erzeugte Heißgas 2 gelangt zunächst in eine verstellbare Gasweiche 14, dessen Eingang 14a zu diesem Zweck an dem Heißgaserzeuger 1 angeschlossen ist. Die Gasweiche 14 weist weiterhin einen ersten Ausgang 14b auf, der mit der thermischen Behandlungseinrichtung 3 in Verbindung steht und über die Heißgasleitung 17 an die Steigleitung 3e angeschlossen ist. Ein zweiter Ausgang 14c steht mit der Trocknungseinrichtung 2 in Verbindung. Im Ausführungsbeispiel 1 ist die Gasweiche so eingestellt, dass der Eingang 14a mit dem ersten Ausgang 14b verbunden ist, sodass der gesamte im Heißgaserzeuger 1 erzeugte Heißgasstrom 2 zunächst in die thermische Behandlungseinrichtung 3 gelangt. Das zwischen dem zweiten Ausgang 14c der Gasweiche 14 und der Trocknungseinrichtung 2 vorgesehene Verbindungsstück 15 ist daher nur gestrichelt dargestellt. Im Rahmen der Erfindung wäre es aber durchaus denkbar, dass die Gasweiche so eingestellt wird, dass ein Teil des Heißgasstromes 2 über das Verbindungsstück 15 in die Trocknungseinrichtung 2 gelangt, um auf diese Weise den Trocknungsgasstrom 2" sowohl in seiner Menge als auch in seiner Temperatur gezielt auf den zu trocknenden Materialstrom 5 abzustimmen.

Die in Fig. 2 dargestellte Anlage entspricht der Anlage gemäß Fig. 1 und zeigt diese lediglich in einer anderen Betriebsart, bei der lediglich eine Trocknung erfolgt. Alle nicht benötigten Anlagenteile, insbesondere die thermische Behandlungseinrichtung 3 und die Kühleinrichtung 8, sind daher nicht in Betrieb und wurden gestrichelt dargestellt, wobei nach der Trocknung auch eine Kühlung des Materials erforderlich sein kann (nicht graphisch dargestellt). Der gesamte im Heißgaserzeuger 1 erzeugte Heißgasstrom 2 gelangt daher über das Verbindungsstück 15 direkt zur Trocknungseinrichtung 2.

Das Vorsehen eines einzigen Heißgaserzeugers 1, der wahlweise die Trocknungseinrichtung oder die thermische Behandlungsrichtung oder beide Einrichtungen mit Heißgas versorgt, senkt die Investition-, Betriebs- und Wartungskosten gegenüber einer Lösung mit zwei Heißgaserzeugern deutlich. Das Vorsehen der Materialweiche 7 und der Gasweiche 14 ermöglicht wiederum eine flexible Behandlung des Materialstroms, sodass dieser gewünschtenfalls lediglich getrocknet oder getrocknet und der weiteren thermischen Behandlung unterzogen werden kann.

## Patentansprüche

1. Anlage zur thermischen Aufbereitung eines Materialstroms (5, 5', 5") mit
- einem Heißgaserzeuger (1) zur Erzeugung eines Heißgasstroms (2),
- einer thermische Behandlungseinrichtung (3), die über eine Heißgasleitung (17) mit dem Heißgaserzeuger (1) verbunden ist und einen Materialeinlass (3b) zur Aufgabe des thermisch zu behandelnden Materialstroms, einen Materialauslass (3g) zum Abführen des thermisch behandelten Materialstroms (5") und einen Abgasauslass aufweist,
- einer Trocknungseinrichtung (4), die mit dem Abgasauslass (3a) der thermischen Behandlungseinrichtung (3) verbunden ist und einen Materialeinlass (4b) zur Aufgabe eines zu trocknenden Materialstroms (5), einen Materialauslass (4d) zum Abführen des getrockneten Materialsstroms (5') und eine Trocknerabgasleitung (4e) aufweist,
- einer verstellbaren Materialweiche (7) mit einem Eingang (7a) und wenigstens einem ersten und einem zweiten Ausgang (7b, 7c), wobei der Eingang (7a) der Materialweiche (7) mit dem Materialauslass (4d) der Trocknungseinrichtung (4) und der erste Ausgang (7b) der Materialweiche (7) mit dem Materialeinlass (3b) der thermischen Behandlungseinrichtung (3) in Verbindung steht und der zweite Ausgang (7c) der Materialweiche (7) zum Abführen des getrockneten Materialstroms (5') dient, und
- einer verstellbaren Gasweiche (14) mit einem Eingang (14a) und wenigstens einem ersten und einem zweiten Ausgang (14b, 14c), wobei der Eingang (14a) der Gasweiche (14) mit dem Heißgaserzeuger (1) und der erste Ausgang (14b) der Gasweiche (14) mit der thermischen Behandlungseinrichtung (3) und der zweite Ausgang (14c) der Gasweiche (14) mit der Trocknungseinrichtung (4) in Verbindung steht.

2. Anlage nach Anspruch 1, **dadurch gekennzeichnet, dass** die Trocknungseinrichtung (4) und/oder die thermische Behandlungseinrichtung (3) durch eine Steigleitung (3e, 4a) und/oder eine Wirbeleinrichtung und/oder ein Drehrohr und/oder eine Fluidisiereinrichtung gebildet wird.

3. Anlage nach Anspruch 1, **dadurch gekennzeichnet, dass** die Trocknungseinrichtung (4) und/oder die thermische Behandlungseinrichtung (3) jeweils wenigstens einen Abscheider (3f, 4c) zur Trennung des Materialstroms vom Gasstrom aufweisen.

4. Anlage nach Anspruch 1, **dadurch gekennzeichnet, dass** die Gasweiche (14) derart verstellbar ist, dass der Eingang (14a) der Gasweiche (14) wahlweise mit einem oder mit beiden Ausgängen (14b, 14c) verbunden ist.

5. Anlage nach Anspruch 1, **dadurch gekennzeichnet, dass** die Materialweiche (7) derart verstellbar ist, dass der Eingang (7a) der Materialweiche wahlweise mit dem einen oder mit dem anderen Ausgang (7b, 7c) verbunden ist.

6. Anlage nach Anspruch 1, **dadurch gekennzeichnet, dass** die thermische Behandlungseinrichtung (3) ein oder mehrere Vorwärmerstufen (3c) umfasst.

7. Anlage nach Anspruch 1, **dadurch gekennzeichnet, dass** die thermische Behandlungseinrichtung (3) zum Kalzinieren oder Oxidieren oder Aufheizen des Materialstroms ausgebildet ist.

8. Anlage nach Anspruch 1, **dadurch gekennzeichnet, dass** der Heißgaserzeuger (1) mit einer Torrefizierungs- und/oder einer Pyrolyseeinrichtung in Verbindung steht.

9. Verfahren zur thermischen Aufbereitung eines Materialstroms (5), wobei in einem Heißgaserzeuger (1) ein Heißgasstrom (2) erzeugt wird, der in einer thermischen Behandlungseinrichtung (3) zur thermischen Behandlung des Materialstroms verwendet wird, und in einer Trocknungseinrichtung (4) der Materialstrom (5)getrocknet wird, wobei die Option besteht, den getrockneten Materialstrom (5') entweder auszuschleusen oder der thermischen Behandlungseinrichtung (3) zuzuführen und wobei weiterhin die Option besteht, die Trocknungseinrichtung (4) mit Abgasen der thermischen Behandlung des Materialstroms und/oder mit wenigstens einem Teil des im Heißgaserzeuger (1) erzeugten Heißgasstroms (2) zu betreiben.

10. Verfahren nach Anspruch 9, **dadurch gekennzeichnet, dass** der Heißgaserzeuger (1) zur Erzeugung des Heißgasstroms (2) wenigstens teilweise mit Brennstoff (12) aus erneuerbaren Rohstoffen und/oder wiederverwertbaren Rohstoffen, wie beispielsweise ein behandeltes Material aus einer Torrifizierungs- und/oder Pyrolyseeinrichtung, betrieben wird.

11. Verfahren nach Anspruch 9, **dadurch gekennzeichnet, dass** der Materialstrom (5', 5") nach ausschließlicher Trocknung oder nach der thermischen Behandlung gekühlt wird, wobei die dabei entstehende Wärme und/oder Energie rekuperiert und für die Trocknung und/oder thermische Behandlung wenigstens teilweise zurückgeführt und/oder verstromt wird.

12. Verfahren nach Anspruch 9, **dadurch gekennzeichnet, dass** der Heißgaserzeuger wenigstens teilweise mit Wärme und/oder Energie gespeist wird, die in Verbund mit der dargestellten Anlage steht.

## Claims

1. Plant for the thermal preparation of a material flow (5, 5', 5"), having
- a hot gas generator (1) for generating a hot gas flow (2),
- a thermal treatment device (3) which is connected to the hot gas generator (1) via a hot gas line (17) and comprises a material inlet (3b) for admitting the material flow that is to be thermally treated, a material outlet (3g) for discharging the thermally treated material flow (5"), and an exhaust gas outlet,
- a drying device (4) which is connected to the exhaust gas outlet (3a) of the thermal treatment device (3) and comprises a material inlet (4b) for admitting a material flow (5) that is to be dried, a material outlet (4d) for discharging the dried material flow (5'), and a dryer exhaust gas line (4e),
- an adjustable material gate (7) having an inlet (7a) and at least one first and one second outlet (7b, 7c), wherein the inlet (7a) of the material gate (7) is connected to the material outlet (4d) of the drying device (4), the first outlet (7b) of the material gate (7) is connected to the material inlet (3b) of the thermal treatment device (3), and the second outlet (7c) of the material gate (7) serves to discharge the dried material flow (5'), and
- an adjustable gas gate (14) having an inlet (14a) and at least one first and one second outlet (14b, 14c), wherein the inlet (14a) of the gas gate (14) is connected to the hot gas generator (1), the first outlet (14b) of the gas gate (14) is connected to the thermal treatment device (3), and the second outlet (14c) of the gas gate (14) is connected to the drying device (4).

2. Plant according to Claim 1, **characterized in that** the drying device (4) and/or the thermal treatment device (3) consists of a riser pipe (3e, 4a) and/or a swirler and/or a rotary tube and/or a fluidizing device.

3. Plant according to Claim 1, **characterized in that** the drying device (4) and/or the thermal treatment device (3) each have at least one separator (3f, 4c) for separating the material flow from the gas flow.

4. Plant according to Claim 1, **characterized in that** the gas gate (14) is adjustable such that the inlet (14a) of the gas gate (14) is selectively connected to one or both outlets (14b, 14c).

5. Plant according to Claim 1, **characterized in that** the material gate (7) is adjustable such that the inlet (7a) of the material gate is selectively connected to one or the other outlet (7b, 7c).

6. Plant according to Claim 1, **characterized in that** the thermal treatment device (3) comprises one or more pre-heater stages (3c).

7. Plant according to Claim 1, **characterized in that** the thermal treatment device (3) is designed for calcining or oxidizing or heating the material flow.

8. Plant according to Claim 1, **characterized in that** the hot gas generator (1) is connected to a torrefaction and/or pyrolysis device.

9. Method for the thermal preparation of a material flow (5), wherein a hot gas flow (2) is generated in a hot gas generator (1) and is used in a thermal treatment device (3) for the thermal treatment of the material flow, and the material flow (5) is dried in a drying device (4), there being the option of either discharging the dried material flow (5') or feeding it to the thermal treatment device (3), there further being the option of operating the drying device (4) using exhaust gases from the thermal treatment of the material flow and/or with at least part of the hot gas flow (2) generated in the hot gas generator (1).

10. Method according to Claim 9, **characterized in that** the hot gas generator (1) for generating the hot gas flow (2) is operated at least in part using fuel (12) from renewable raw materials and/or reusable raw materials, such as a treated material from a torrefaction and/or pyrolysis device.

11. Method according to Claim 9, **characterized in that** the material flow (5', 5") is cooled after only drying or after the thermal treatment, the resulting heat and/or energy being recuperated and at least partially recirculated and/or converted to electricity for drying and/or thermal treatment.

12. Method according to Claim 9, **characterized in that** the hot gas generator is supplied at least in part with heat and/or energy that is in conjunction with the depicted plant.

## Revendications

1. Installation pour le traitement thermique d'un flux de matière (5, 5', 5") avec :
- un générateur de gaz chaud (1) destiné à la production d'un flux de gaz chaud (2) ;
- un mécanisme de traitement thermique (3), lequel est raccordé au générateur de gaz chaud (1) par l'intermédiaire d'une conduite de gaz chaud (17) et lequel présente une entrée de matière (3b), qui est destinée à l'alimentation du flux de matière devant être traité thermiquement, une sortie de matière (3g), qui est destinée à l'évacuation du flux de matière (5") devant être traité thermiquement, et une sortie de gaz d'échappement ;
- un mécanisme de séchage (4), lequel est raccordé à la sortie de gaz d'échappement (3a) du mécanisme de traitement thermique (3) et lequel présente une entrée de matière (4b), qui est destinée à l'alimentation d'un flux de matière (5) à sécher, une sortie de matière (4d), qui est destinée à l'évacuation du flux de matière séchée (5'), et une conduite de gaz d'échappement (4e) du mécanisme de séchage ;
- un séparateur de matière (7) ajustable avec une entrée (7a) et tout au moins une première et une deuxième sortie (7b, 7c), l'entrée (7a) du séparateur de matière (7) étant en jonction avec la sortie de matière (4d) du mécanisme de séchage (4) et la première sortie (7b) du séparateur de matière (7) étant en jonction avec l'entrée de matière (3b) du mécanisme de traitement thermique (3) et la deuxième sortie (7c) du séparateur de matière (7) servant à l'évacuation du flux de matière séché (5') ; et
- un séparateur de gaz (14) ajustable avec une entrée (14a) et tout au moins une première et une deuxième sortie (14b, 14c), l'entrée (14a) du séparateur de gaz (14) étant en jonction avec le générateur de gaz chaud (1) et la première sortie (14b) du séparateur de gaz (14) étant en jonction avec le mécanisme de traitement thermique (3) et la deuxième sortie (14c) du séparateur de gaz (14) étant en jonction avec le mécanisme de séchage (4).

2. Installation selon la revendication 1, **caractérisée en ce que** le mécanisme de séchage (4) et/ou le mécanisme de traitement thermique (3) est ou sont formés par une colonne montante (3e, 4a) et/ou par un mécanisme turbulateur et/ou par un tube rotatif et/ou par un mécanisme de fluidification.

3. Installation selon la revendication 1, **caractérisée en ce que** le mécanisme de séchage (4) et/ou le mécanisme de traitement thermique (3) présentent respectivement tout au moins un séparateur (3f, 4c) en vue de séparer le flux de matière du flux de gaz.

4. Installation selon la revendication 1, **caractérisée en ce que** le séparateur de gaz (14) est ajustable de telle sorte que l'entrée (14a) du séparateur de gaz (14) peut être raccordée, de manière sélective, avec l'une des deux sorties (14b, 14c) ou avec les deux.

5. Installation selon la revendication 1, **caractérisée en ce que** le séparateur de matière (7) est ajustable de telle sorte que l'entrée (7a) du séparateur de matière peut être raccordée, de manière sélective, avec l'une des sorties (7b, 7c) ou avec l'autre.

6. Installation selon la revendication 1, **caractérisée en ce que** le mécanisme de traitement thermique (3) comprend un ou plusieurs étages de préchauffage (3c).

7. Installation selon la revendication 1, **caractérisée en ce que** le mécanisme de traitement thermique (3) est conçu en vue de réaliser la calcination ou l'oxydation ou le chauffage du flux de matière.

8. Installation selon la revendication 1, **caractérisée en ce que** le générateur de gaz chaud (1) est en jonction avec un mécanisme de torréfaction et/ou un mécanisme de pyrolyse.

9. Procédé destiné au traitement thermique d'un flux de matière (5), dans lequel un flux de gaz chaud (2) est produit dans un générateur de gaz chaud (1) et est utilisé dans un mécanisme de traitement thermique (3) en vue du traitement thermique du flux de matière, et le flux de matière (5) est séché dans un mécanisme de séchage (4), dans lequel il est possible d'écluser le flux de matière séchée (5') ou de l'acheminer jusqu'au mécanisme de traitement thermique (3) et dans lequel il est en outre possible de faire fonctionner le mécanisme de séchage (4) avec des gaz d'échappement issus du traitement thermique du flux de matière et/ou avec tout au moins une partie du flux de gaz chaud (2) produit dans le générateur de gaz chaud (1).

10. Procédé selon la revendication 9, **caractérisé en ce que** le générateur de gaz chaud (1) est mis en fonctionnement en vue de la production du flux de gaz chaud (2), tout au moins en partie avec du combustible (12) issu de matières premières renouvelables et/ou de matières premières recyclables, telles que par exemple une matière traitée à partir d'un mécanisme de torréfaction et/ou d'un mécanisme de pyrolyse.

11. Procédé selon la revendication 9, **caractérisé en ce que** le flux de matière (5', 5") est refroidi à l'issue du séchage exclusif ou après le traitement thermique, dans lequel la chaleur et/ou l'énergie produite(s) à cette occasion est ou sont récupérées et, tout au moins en partie, réinjectées et/ou répandues à des fins de séchage et/ou de traitement thermique.

12. Procédé selon la revendication 9, **caractérisé en ce que** le générateur de gaz chaud est alimenté, tout au moins en partie, avec de la chaleur et/ou de l'énergie, qui est en lien avec l'installation représentée.
